# EUROPEAN PATENT SPECIFICATION

(11) **EP 2 527 051 B1**
(45) Date of publication and mention of the grant of the patent: **17.06.2015**
(21) Application number: 12464011.1
(22) Date of filing: 24.05.2012
(51) Int. Cl.: B09B 3/00, B29C 70/26

(54) **Composite material comprising asbestos-cement**
Asbesthaltigen Zement enthaltendes Verbundmaterial
Matériau composite comprenant de l'amiante-ciment

(30) Priority: 24.05.2011 RO 201100495
(43) Date of publication of application: 28.11.2012
(73) Proprietor: Ionescu, Silvian, Judetul Ilfov (RO)
(72) Inventor: Ionescu, Silvian, Judetul Ilfov (RO)
(74) Representative: Fierascu, Cosmina-Catrinel

(56) References cited:
- EP-A1- 0 581 094
- DE-A1- 2 402 976

## Description

This invention provides a composite material useful in waste recycling industry and building materials industry and a process for obtaining it.

Asbestos is a generic term used for fibrous minerals belonging to the group of serpentine type silica, such as chrysotile and amphibole. The most commonly used asbestos based mineral is chrysotile. Asbestos is a very resistant mineral to high temperatures, to the action of acids, being an excellent insulator as well, and therefore it is used on a large scale from obtaining some building materials, and for improving the mechanical properties of composite materials, such as rubber. As the free form of the asbestos fibers is life-threatening for living organisms, and it was classified as a hazardous product, some countries have specific rules on collection and storage thereof.

There are known various building materials that contain asbestos, but the main building material which includes asbestos is the asbestos-containing cement called asbestos-cement.

The asbestos-cement is a material composed of cement and asbestos fibers useful mainly for buildings.

The asbestos-cement was extensively used in the building materials industry for example for roofing tiles and/or pipelines for fluid transportation. It was found that the use of asbestos and, by default, asbestos-cement is health threatening for living beings, causing various severe disorders.

It has been shown that the exposure to asbestos-cement under regular conditions has leaded in time to the release of asbestos fibers in the environment.

The removal of the asbestos-cement waste is performed mainly by storage. Storage of asbestos, asbestos-cement, waste asbestos-cement industrial products that contain asbestos, is done in special in storing and handling spaces for hazardous waste. It is estimated that asbestos-cement represents about 70% of the amount of hazardous asbestos waste storage. The asbestos-cement lifetime being of about 50-70 years, it is considered that the degradation induced by man and nature on asbestos-cement plates, causes the air dispersion of asbestos fibers and it is a concern for the health of living organisms. International standards have been established for the handling and storage both of waste asbestos and asbestos containing materials.

In time, the storage places of hazardous waste materials containing asbestos have increased. Huge areas, of hectares of land are currently allocated worldwide for storage of impressive amounts of hazardous materials that contain asbestos. Such land serving as waste storage space, cannot be integrated in economic circuits.

There are known different methods for the neutralization of asbestos-cement.

Older studies on asbestos-cement recycling, proposed to insulate the roofs made of asbestos-cement plates with poliurethanic foam, in order to avoid demolition of buildings and transportation of the waste to special collection places. This solution is expensive and difficult due to the standards imposed by the environmental authorities.

Another method for removing the asbestos-cement waste, is heat induced transformation thereof (at a temperature of 1200° C) to non-hazardous minerals. This solution involves high costs and is energy-consuming.

Another known method to neutralize the waste materials containing asbestos is proposed by the owner Aton-HT SA of Poland in Patent No. P-377957. Said patent discloses microwave heat treatment for neutralization of the asbestos containing materials. The proposed method involves special reactors for the neutralization of a wide range of hazardous waste at high temperatures. By this method, different types of asbestos containing waste are crushed (in a specially designed sealed crusher hermetically sealed), that are further mixed with small amounts of adjuvant, and placed in the microwave room of the reactor. At temperatures of 900°C-1100°C crystalline structure of asbestos fibers changed to an amorphous state. This method is complicated and requires great energy and large workspaces. The effectiveness of this method is not sufficiently demonstrated, being applicable individually for economic reasons, and the resulted products have limited industrial utility.

Several associations of polymers and asbestos in order to obtain composite materials with improved mechanical properties, have been also described. The composite material disclosed in US3773705 includes asbestos fibers for improving the tensile strength of composite materials of polymer matrix. The disadvantage of this technology is that the use of asbestos is no longer permitted because it is considered to be a hazardous substance.

EP-A-581094 describes the use of polyisobutylene for the disposal of dangerous materials, including materials containing asbestos.

The objective of the present invention is to solve the problem of asbestos-cement waste through recycling thereof by embedding it in a plastic matrix, preferably to a ratio of up to 20% by weight, preferably 12-20% by weight, more preferably 20% by weight, and having a particle size of 2-5 micrometers. The material thus obtained was shown to completely seal the asbestos fibers from asbestos-cement that are no longer released to the environment, even after a long period of time. The material thus obtained is very resistant, easily workable with good mechanical properties, and may be used for building materials.

Great amounts of asbestos waste are introduced in the economic cycle, by providing a new composite material having the unexpected property of sealing the asbestos fibers in a plastic material matrix, and so, representing an alternative to materials containing asbestos. Environmental benefits are obvious, due to the fact that the processing and neutralization of large amounts of waste asbestos, mainly asbestos- cement, more precisely their negative impact on the environment, is substantially diminished. Another advantage is that the composite materials may successfully replace materials currently considered hazardous for the living organisms.

The composite material according to the present invention comprises the following: a plastic material matrix (thermoplastic polymer) and grinded asbestos-cement as filler, preferably waste asbestos-cement, wherein the optimal concentration of the asbestos-cement is of 20% by weight. The asbestos-cement grinded particles size are between 2 micrometers to 0.4 mm, preferably 2-5 micrometers. The thermoplastic polymer is PET waste, so that the cost of the goods is low. The invention also concerns a composition comprising the composite material according to the invention together with one or more adhesives. The composite material may comprise additional asbestos, preferably chrysotile. The composite material may contain also alumina (Al₂O₃).

The composite material according to the invention may also be used for the manufacture of some industrial products, because it has mechanical properties that allow a good workability, it is waterproof, corrosion resistant, noise insulator, shock absorber and it has a good elasticity. Products made of said composite material may be used for obtaining different parts for industry, and the obtained products are recyclable.

The specification also describes a process for obtaining a composite material that consists in providing a homogeneous mixture of plastics (thermoplastic polymer) and grinded asbestos-cement, followed by injection molding, the process comprising the steps:
a)-grinding of the plastic materials (thermoplastic polymer),
b)-grinding of the asbestos-cement,
c)- plasticizing of the molten granules of plastic material at a temperature from 170°C to 280°C,
d)- embedding the grinded asbestos-cement obtained in step b) preferably to a ratio of up to 20 % into the continuous plastic phase,
e) injecting the formed mixture in a die at a pressure of 2490-2500 bar preferably at a rate of 25 to 45 mm / sec.
f) compaction of the mixture in the die at a maintenance pressure, preferably of 600-800 bar, forming a tail/cushion of material in order to compensate for die contraction,
g) cooling the melt in the die within a period of time of 100 to 130 seconds / piece.

For obtaining the composite material it is provided a process of injection moulding with cushion/tail of material.

The process for producing the composite material can achieve simultaneous recycling of asbestos waste and plastics waste (thermoplastic polymers) by injection into a die. The process consists of the following steps: grinding of the plastic material, preferably obtained from plastics waste, grinding of the asbestos-cement to the desired particle size, plasticizing of the molten grinded plastic material at a temperature preferably comprised between 170°C and 280°C, including an amount of the grinded asbestos-cement previously obtained in continuous plastics phase, that is preferably up to 20% by weight, injecting into a die of the formed mixture at a pressure that is preferably of 2490-2500 bar with a rate of 25 to 45 mm / sec, and maintaining at a compaction pressure of 600-800 bar to form a material tail/cushion for compensation of shrinkage in the die, and cooling the melt in the die for a period of time of 100 to 130 seconds / piece. The particle size of the used asbestos-cement may be comprised in the range of 2 micrometers to 0.4 mm, preferably 2-5 micrometers. The waste plastic used is PET.

In one embodiment, during the asbestos-cement grinding stage, alumina (Al₂O₃) can be added, as a stable and hard oxide.

In another embodiment, the asbestos-cement can be grinded together with asbestos fibers, preferably chrysotile, for providing their features to the composite material: fiber morphology, high tensile strength, heat and corrosion resistance, low electrical conductivity, high friction coefficient.

The preparation process according to the invention comprises the following steps: - plastics supply (dispensing)
- heating and melting the material in the cylinder
- introducing of grinded asbestos-cement
- closure of the die
- introducing the molten material into the die,
- closing of the die;
- introduction of molten material under pressure into the die
- solidification and cooling of the material in the die
- die opening
- removing the injected piece.

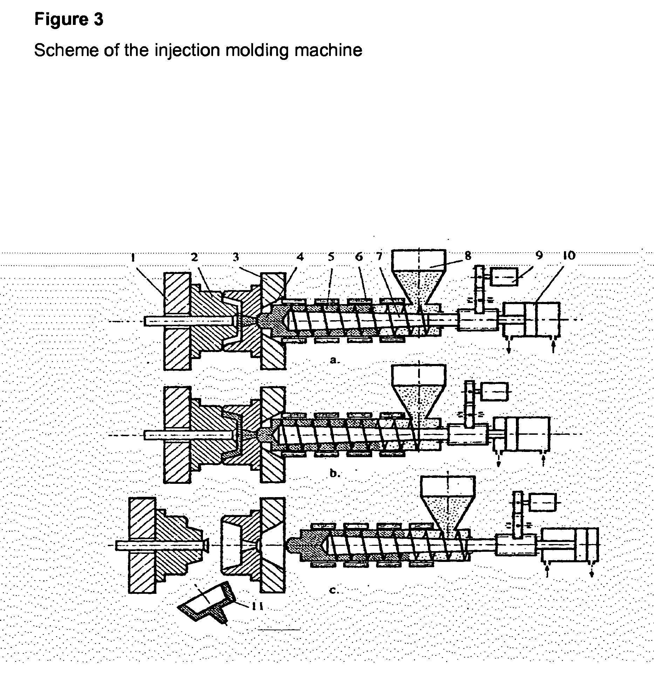

The injection of the composite material is performed according to the scheme provided in Figure 3, and involves the following:
a) injection of the material in the die,
b) solidification and cooling of the melt material,
c) opening the die and discarding the obtained piece from the die.

There have been used the following raw materials: granular plastic materials and grinded asbestos-cement both being preferably recycled form waste materials.

The raw material granules, namely plastic ( PET) and grinded asbestos-cement are subjected to the following steps for obtaining the composite material:
- introduction of raw materials in the funnel (8) whereform it falls by gravity into the injection cylinder (5)
- transportation of the plastic material from the injection cylinder via the screw (7), by rotation movement, towards the front of the cylinder, where there is the injection nozzle (4). The rotation movement is performed using a screw driven system (9).
- heating the cylinder by heaters (6) and processing of the melted polymer granules; the friction occurring in the injection cylinder are contributing also to the melting of the plastic materials, and,
- feeding of the grinded asbestos-cement in the injection cylinder.

The homogeneity of the obtained product depends on the size of the asbestos-cement particles and thus the physical-chemical properties thereof. It is important to add the asbestos-cement to the injection process when the plastic material is fluid to be able to completely incorporate the asbestos-cement particles so that to obtain a final product of high homogeneity;
- the injection of the molten plastics to the die (2) by the screw (7) as a result of pressure of the drive (10);
- solidification and cooling of material in the die, removal of the mobile platen (1) of the injection device from the fixed platen (3). Thus, the die is opened and following the actuation of the rejection system, the injected piece (11) is removed from the die.

The injection process depends on the correct working parameters of the injection machine in compliance with the raw materials that are used.

The thermoplastic material (plastics) melt is made by transferring the heat from the heated cylinder wall to the material subjected to the injection, and by converting the mechanical energy into heat by friction. The higher the plastic material (thermoplastic material) temperature the higher its fluidity, and the easier the die filled and the injection time is reduced. The die temperature is the main parameter of the cooling / solidification stage of the part.

The pressure in the die and temperature of the material when sealing are determined by the temperature in the die. The lower the die temperature is, the sealing of the material takes place at higher temperature and pressure. Therefore, the recommended pressure will be higher and therefore a lower die temperature will partially compensate the effect of thermal dilatation.

The whole process takes place through the following steps:
- plasticizing
- filling the die
- compaction
- cooling and stripping

The plasticizing of grinded plastics (thermodynamic polymers) in melt state is performed upon heating to high temperatures (melting temperatures). The plasticizing is done by transferring the heat from the cylinder wall of the plastic injection machine, as well as through the friction heat from the inside of the material. Shearing of the screw duct cause both intense heating and mixing of the material subjected to plasticization. This increases the efficiency of heat transfer from the cylinder wall to the bulk, by forced convection. The aim of the plasticizing is to provide a rheologically and thermally homogeneous melt, of a viscosity low enough to allow the transfer of pressure and flow phenomena. Due to the friction with the cylinder wall, the plastic material located in the screw duct is prevented from taking part to the screw rotation and therefore it is moved axially to the top of the screw. The stronger axial movement of the material is braked, the more intense is sheared the material between the two marginal layers, considered to be adherent to the cylinder wall and the bottom that screw channel respectively. While in the feeding area the granules enter the screw duct, at the top end of the screw the molten material accumulates. Increasingly filling of the storage space results in axial movement during rotation of the screw. Hydraulic adjustment is done so that the move back of the screw is enabled only after exceeding an adjustable counterpressure called dosing counterpressure or plasticizing counterpressure. The rotation of the screw, and thus the axial movement is stopped when it reaches an adjustable limit switch. The screw and the plastic material remain in a steady state until the start of the axial movement of the screw for the next die filling cycle. During stationary time, the plastic material in the storage space and screw duct are under continuous heat transfer with the cylinder wall. If plasticizing ability of an injection machine is too small and the lamination phase is to short, there may be a heterogeneous or incomplete melt of the granules. Choosing the operating point in terms of lamination, means to adapt the plastification parameters to the needs of low viscosity and corresponding homogeneity, without exceeding the maximum rotation time allowed for reducing the period of time of the injection cycle to a minimum.

When filling the die, the plastic material enters the die cavity, and the front advancement of the material flow, has a parable shape. The outer parts of melted plastic material (thermoplastic material) in contact with cold walls of the die, solidifies in the die thus forming a marginal insulating layer. The flow channel of the material under pressure, is not formed by the die itself, but by the strengthened marginal layer. The layer, as effect of the die wall temperature, has a shear rate that is smaller than the inner layer which has higher shear rates. Thus, between the inside and outside layers there are different deformation rates causing a flow front as a parable (Fountain effect). The marginal layer in the die is thicker at the point of observation as heat gain is lower, respectively as the heat that arises through shear is lower. Since the melt flow loses part of the heat through the flow path, at the points that are more distant to the injection abutment, the heat input per unit of time is smaller and the marginal layer thicker than that is nearer to the injection abutment. For the solidification of the molten material the journey is not critical, instead, the time is vital; so that an increase of the marginal layer thickness that is away from the abutment, slows the flow. At the very thin-walled molded parts there is a significant increase of the resistance to die filling for low speed filling. For a good flow of the thermoplastic material through small channels of the network and filling the die cavity as soon as possible, it is needed to increase the injection pressure. Viscosity increases with increasing pressure, which lowers the deformation rate. Due to increased viscosity that prevents turbulent flow, the molten material has a laminar flow for high pressures as well. The die filling requires only 5% of the injection cycle time. To achieve a smooth filling of the die, the injection machine has to fulfill the following requirements:
- to use the full hydraulic capacity and control;
- due to the specificity and non-stationary features of the flow process, the rate of the screw increased at the start of the feeding from zero to a final rate at it has to jump back to 0, the moment the flow front reached the end of the flow path;
- high pressure of the melt in the screw head, necessary to the flow process, may not behave as internal static pressure after completing the die filling, because it would cause an overload or a suprainjection of the piece;
- the lower the injection speed the lower the transport efficiency of the screw becomes (reverse flow in the melt channel, loss over flank). Thus for a given piece, each injection rate requires adjustment of the dosing screw stroke.

The die filling properties determines the features of the piece made of the composite material according to the invention, as follows:
- it determines the macromolecular orientation;
- it determines the melt temperature, especially in areas that are far from the injection site;
- it determines indirectly the compaction and the features of the piece, because of the compacting effect that is even stronger when the filling time of the die is shorter.

After the die filling stage, the melted material should be compacted, because the thermoplastics have the specific volume significantly less at the processing temperature than at the ambient temperature. If the injection would take place without compaction, the volume of the cooled piece would be different from that of the die cavity. Shrinkage depending on the configuration of the part and the cooling process would born goals in the piece. These are offset by compacting of the melt. The compaction stage is optimized due to the fact that all the plastic materials have high compressibility.

For the tail/cushion material injection, in order to achieve the compaction process, the piston stroke of the dosing screw is adjusted so that not the whole dosed material to be pushed in the die at the sealing point, but to remain a rest named tail/cushion of material. Otherwise due to the fluctuations, the screw tip reaches its final position before the final sealing point, the compensation of the piece shrinkage ending prematurely.

Alternatively, for the injection without tail/cushion of material ― the pressure inside the die at constant volume is achieved via the piston screw, positioned during the whole period of next pressure, in the final position of the injection path. For this it is necessary to limit the dosing and to achieve the maximum hydraulic pressure of the injection machine. Hydraulic pressure during the process is responsible for maintaining the limit position of the screw piston to the point of sealing, i.e. to prevent a return of the melt in the die.

Cooling and stripping, requires chilling of the injected piece at the maximum temperature of plastic material (during filling the die), at room temperature required, due to the conductivity of the thermoplastic material, a relatively long time. After opening the die, the cooling process continues outside the die. Characteristic cooling time for cooling process is the longest part of the time of the injection cycle, representing approximately 68% of the total period of the cycle. In order to achieve, for a high productivity, short cycle, measures should be taken to reduce the cooling time.

As a step in the process, cooling is considered to be that period of the process that takes place in the die.

In the manufacturing process it is important to follow the following aspects:
- uniformity of granules
- the moisture content in the granules, granular composite material can absorb moisture more or less depending on the material used as support (PVC , PP, PE, or PET), as well as of the grinded asbestos-cement ratio of the product. Water absorption influence material workability, inconvenience solved by the operator by processing the granules, before they are submitted to injection, in dryers, to prescribed periods of time and temperature for each type of material in hand;
- thermal and chemical stability - during the processing in the machine drum and injection die, the plastic material is subjected to high pressures and temperatures over a longer period of time, when it must not degrade or decompose thermally. Also, the chemical agents in the environment or operating (acids, bases, solvents, adhesives, paints) attack the plastic materials according to a process of irreversible degradation.

Other features and advantages of the invention will be better understood from following description showing preferred embodiments of the invention, given by way of example, and without any limitation of the invention.
Figure 1 shows the SEM photomicrography of composite material chips, of PVC matrix and 20% asbestos-cement filling PVC-A20: (a). 250x, (b).1250 x (c). 5000x.
Figure 2 shows the spectral diagrams of composite material samples vs the spectral diagram of the control.
Figure 3 shows the scheme of the injection molding machine.

Several examples for illustrating the invention given below.

### Example 1 (only the example with PET falls within the scope of the invention)

### Preparation of a composite material having thermoplastic polymer (plastics) matrix and asbestos-cement filling, wherein the asbestos fibers are sealed in the plastic matrix:

For obtaining said composite materials, there were used the following raw materials:
   - waste plastics: PVC, PP, PE or PET. The plastic material was processed previously by conventional methods of recycling plastics, and is in the form of granules of particle size 200-300 micrometers.
   - grinded asbestos cement-waste. Asbestos-cement slabs were grinded in ball mills, according to the rules for handling hazardous waste. Depending on the grinding time (4 hours, 16 hours, 32 hours, etc.) there were obtained samples of grinded asbestos-cement having a particle size comprised in the range of 0.2 micrometers to 0.4 mm.

### A. Determination of the particle size of the grinded asbestos-cement for obtaining a finished piece by extrusion.

Raw materials used to obtain composite materials: PVC and grinded asbestos-cement.
Processing: There were mixed consecutively the PVC granules, with the 10-30% weight percent grinded asbestos-cement to particle size of between 2 micrometers to 0.4 millimeters, as mentioned above, according to the grinding times. The mixture is brought to the melting temperature of the plastic material and homogenization of the melted mixture is performed. The melted material is poured into the die and the melt is cooled. The obtained mixture is subjected to an extrusion process for obtaining a sample.

The mixtures containing from 10 to 30% grinded asbestos-cement of particle size over 5 micrometers can not be processed by extrusion because it generates a sudden increase of the pressure in the melt.

### B. Testing the mechanical properties of the composite material according to the amount of grinded asbestos-cement having the particle size of 2-5 micrometers, in the plastic material (polymer) matrix.

By extruding a composite material made of plastic material matrix and the asbestos-cement filling grinded to a particle size of 2-5 micrometers we obtained a sample of 125 x 12.5 x 3 mm size.

The tensile strength characteristics of samples made of PVC matrix and using different amounts of grinded asbestos-cement are shown in the following table:

**Table 1**

| Polymer matrix: PVC | Filler: Asbestos-cement (% by weight), particle size 2-5µm | Average force [N] | Average Elongation [mm] | Mean specific deformation [%] |
|---|---|---|---|---|
| Sample 1 | 10 | 662.50 | 14.4 | 20.5 |
| Sample 2 | 20 | 460.00 | 5.29 | 7.55 |
| Sample 3 | 30 | 346.63 | 3.23 | 4.62 |

It is found that the composite material having good mechanical properties is that which comprises the optimal ratio of recycled asbestos-cement in the polymer matrix that is up to 20% by weight, preferably 12-20%. The objective of the invention being to recycle a larger amount of asbestos-cement it comes out that the composite material containing an ratio of 20% by weight of asbestos-cement is the most preferred. The composite material containing more than 20% grinded asbestos-cement, although incorporating more asbestos-cement, has the weakest specific stretching and deformation characteristics.

The improvement of the mechanical properties (hardness, tensile strength) of the finished piece containing asbestos-cement may be done by adding asbestos such as chrysotile fiber, achieving the following: fiber morphology, high tensile strength, heat and corrosion resistance, low electrical conductivity, high coefficient of friction. Adding alumina Al₂O₃ as stable and hard oxide also lead to improved physical properties of the obtained finished piece.

### C. Tests for proving the unexpectedly sealing effect of the asbestos

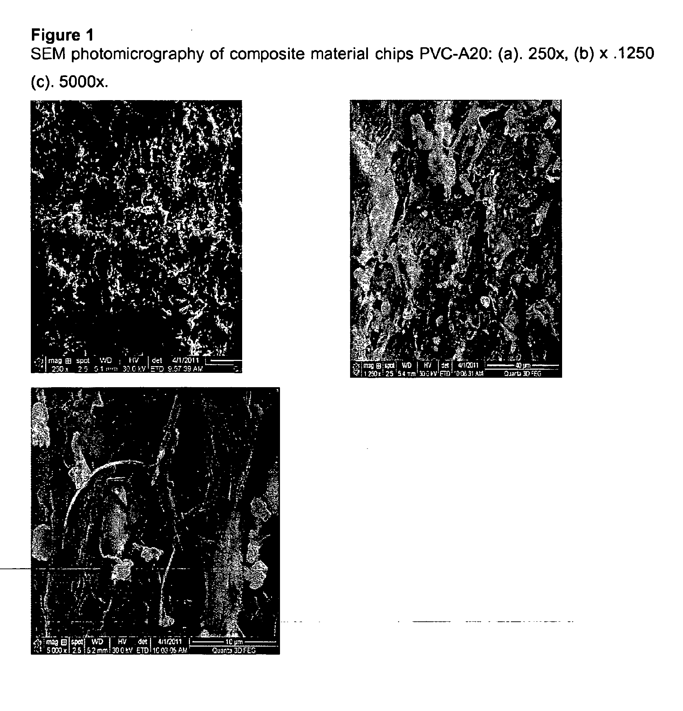

These tests were done on composite material samples of optimal content of 20% asbestos-cement having the particle size in the range of 2-5µm. The capacity to seal asbestos was tested by subjecting the composite material sample the following tests: **1. Mechanical processing:** The sample was machined. It vas verified whether further to the mechanical processing it could be identified a cleavage of fibers formations of asbestos from the composite sample. It was established by microscopy that the asbestos fibers in the sample are sealed by the plastic matrix. The microphotographs are shown in Figure 1 SEM (scanning electron microscopy) of the chips fragment of composite according to the invention (PVC matrix filled with asbestos-cement 20%, PVC-A20). On the surface there were not observed free asbestos fibers.

### 2. Erosion wear testing:

### Testing to wear erosion- point contact.

For the study of behavior to erosion wear of the composite material according to the invention vs. plastic material without asbestos-cement filler, there were prepared a number of 6 samples:
- 3 control samples: PVC, PP and PET;
- 3 composite samples (matrix of PVC, PP and PET filled with asbestos-cement 20% particle size in the range 2-5 micrometers); the samples were tested for abrasion using a steel ball that slides on the sample. In the contact area it is applied a SiC paste. After an hour the wear stain is measured. Waste material and SiC are collected and analyzed for the presence of asbestos in the amount of eroded material.

The measured test parameters are shown in Table 2 below:

**Table 2**

| Sample | Wear spot diameter [mm 10⁻³] | Waste material volume [mm³] | Erosion time for 10mm³ material (hours) | Energy intensity of wear (MATCHAD14) [mm3 / J] |
|---|---|---|---|---|
| PVC control | 2.85 | 0.256 | 5.770 x10³ | 330 746 |
| Composite material (PVC + asbestos-cement 20% PVC-A20) | 3.45 | 0.551 | 2.684 x10³ | 711 624 |
| PP control | 4.85 | 2.165 | 0.683 x10³ | 2.796 x10³ |
| Composite material (PP + asbestos-cement 20% PP-A20) | 4.03 | 1.028 | 1.438 x10³ | 1.328 x 10³ |
| PET control | 3.56 | 0.625 | 2.360 x10³ | 807.42 |
| Composite material (PET + asbestos-cement 20% PET-A20) | 3.75 | 0.77 | 1.920 x10³ | 994.47 |

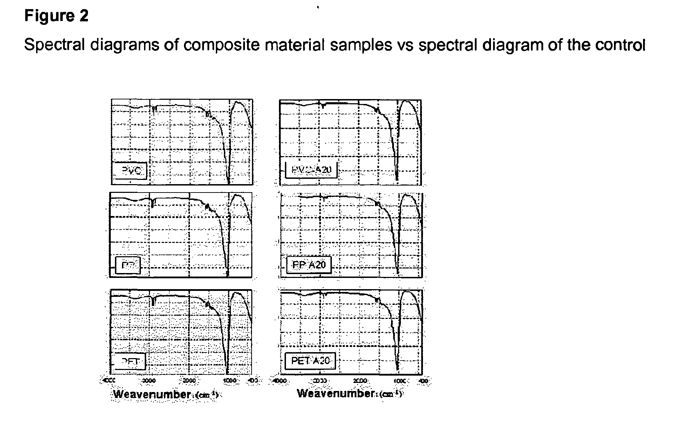

From the data shown in Table 2 it can be concluded that some composite materials have better abrasion resistance than that of the control. It is noted in particular the PP matrix composite material in which the erosion time is substantially increased against the control.
The FT-IR spectra analysis was performed for the collected material according to the invention from each sample subjected to the abrasion wear test compared with the control sample. Spectral diagrams of composite samples revealed the absence of bands characteristic for asbestos (chrysotile or amphibole). Figure 2 shows spectra that were the basis for comparison.

### Testing the erosion wear - linear contact

It was used the classic machine Amsler wear testing of materials. Abrasive material used was SiC. The obtained results are shown in Table 3

**Table 3**

| Sample | Average width of contact stain [m] | Volume of the wear cylinder segment [mm³] | Necessary erosion time for 10mm³ material (h) | Wear energy intensity (Iᵤₑ) [mm³ / J] |
|---|---|---|---|---|
| PVC control | 11.57 x10⁻³ | 37 183 | 4.720 x10³ | 404.669 |
| Composite material PVC + 20% asbestos-cement | 19.97 x10⁻³ | 194.463 | 0.902 x10³ | 2.116 x10³ |
| PP control | 15.61 x10⁻³ | 91.953 | 1.908 x10³ | 1.001 x10³ |
| Composite material PP + 20% asbestos cement | 15.90 x10⁻³ | 97.23 | 1.805 x10³ | 1.052 x10³ |
| PET control | 10.65 | 28.963 | 6.059 x10³ | 315.206 |
| Composite material PET + 20% asbestos cement | 8.36 x10⁻³ | 13.972 | 12.560 x10³ | 152052 |

The wear energy intensity (Iᵤₑ) is a mechanical feature specific to point / linear contacts of the material.

Knowing (Iᵤₑ) the necessary erosion time of 10 mm³ of material can be determined.

Also from Table 3 it can be concluded that the abrasion resistance of composite materials is better than that of the control. It is noticed that during the erosion of composite material of PET matrix unexpectedly shows an increase over the PET control, or over other tested samples.

The times required for erosion in natural environment conditions are shown in Table 4.

**Table 4.**

| Sample plastic material/ Plastic material matrix + asbestos-cement 20% | Necessary erosion time 10mm³ [hours] | | Necessary erosion time in natural environmental conditions: wind, dust [years] |
|---|---|---|---|
| | point contact | linear contact | |
| PVC | 5.770 x10³ | 4.72 x10³ | 26.938 |
| composite material: PVC + 20% asbestos-cement | 2.683 x10³ | 0.902 x10³ | 5.151 |
| PP | 0.683 x10³ | 1.908 x10³ | 10.893 |
| composite material: PP + 20% asbestos cement | 1.438 x10³ | 1.805 x10³ | 10.302 |
| PET | 2.360 x10³ | 6.059 x10³ | 34.584 |
| composite material: PET + 20% asbestos cement | 1.92 x10³ | 12.56 x10³ | 71.693 |

Testing for natural environmental conditions indicated that erosion caused by the environment on a composite material according to the invention may occur in 5 to 71 years depending on the type of the plastic matrix used. It is found that a composite material comprising PET matrix and asbestos-cement filler, the erosion time in natural environmental conditions is doubled.

### 3. Detection of air released asbestos fibers further to the erosion test, in natural environmental conditions.

The composite material sample was subjected to a test that simulates natural erosion environment such as wind, rain and dust abrasion. The determinations were made by subjecting the composite material samples to temperatures of 45 degrees C for 6 hours / day. Air samples were collected at a rate of 2.5 liters / minute on cellulose ester filters, pore diameter 8.8 microns, the collected air volume being of 1475-2810 liters. The composite material samples were immersed in water at room temperature for 23 days. The water was evaporated to dryness, resulting of a dry residue. The infrared spectroscopy analysis of air filters and of the residue did not show asbestos fibers present in the analyzed sample.

### Example 2 (only the example with PET falls within the scope of the invention)

### Process for making a piece of composite material.

The injection processing of the composite material of 20% asbestos-cement was performed using a horizontal injection machine type Arburg 320 K, and a grain dryer Moretto. The size of the molded piece was 87x20x24 mm, and the injected piece weight of 0.030 kg, for a 2 cavities die. The materials used for injection were: PVC and PET. There were made one piece of each material and two pieces of composite material containing 20% asbestos according to the invention with PVC, and PET matrix respectively. The technical parameters of the processes carried out by injection are shown in Table 5:

**Table 5**

| Injection machine type | Arburg 320 K | Arburg 320 K | Arburg 320 K | Arburg 320 K |
|---|---|---|---|---|
| Injection cycle time (sec) | 45 | 45 | 45 | 45 |
| No of die cavities | 2 | 2 | 2 | 2 |
| Piece Weight (kg) | 0.03 | 0.03 | 0.03 | 0.03 |

| Raw materials | Waste PVC granules | Waste PVC + asbestos-cement (20%) | Waste PET granules | Waste PET + asbestos-cement (20%) |
|---|---|---|---|---|
| Cylinder temperature - area 1 (° C) | 170 | 180 | 275 | 265 |
| Cylinder temperature - area 2 (° C) | 175 | 190 | 280 | 260 |
| Cylinder temperature - area 3 (° C) | 180 | 190 | 280 | 260 |
| Cylinder temperature - area 4 (° C) | 185 | 195 | 280 | 250 |
| Cylinder temperature -area 5 (° C) | 185 | 200 | 275 | 240 |
| Injection pressure (bar) | 2500 | 2490 | 2490 | 2490 |
| injection rate (mm / sec) | 25 | 45 | 38 | 38 |
| Maintenance pressure (bar) | 800 | 800/600 | 800/600 | 800/600 |
| Cooling time (sec) | 130 | 130 | 100 | 100 |

There were obtained samples of different sizes with homogeneous structure, of characteristics similar to the polymer embedding the asbestos-cement.

The composite material was of high resistance to thermal and chemical agents. It has acoustic insulation properties and has low thermal and electrical conductivity. It is chemically stable due to its plastic matrix, being an ecological material.

The composite material according to the invention can be used in industry to manufacture road signs signaling the type of vertical poles. The treatment of the composite material with various adhesive can lead to the production of binders used in construction and civil engineering: decorative tiles for buildings, spacers for roads, etc.. This composite material can replace steel, thus competing with aluminum, because it is a combination of light weight plastic material (PVC, polypropylene or polyethylene) and strength, specific stiffness of steel and aluminum respectively. Thus, a weight reduction of 50%, may be obtained in this way, for a 10% thickness increase of the laminate.

The material thus obtained has good corrosion and thermal insulation properties, heat, chemical and petroleum products resistance. Production of composite material pieces may be 2-3 times cheaper than of steel. Analyzing the implications of replacing metals with such materials, it should be noted that the advantage is not only the reduced weight, but also an equal or superior operation. The composite material according to the invention can be used in manufacturing of main pieces of low weight, specific parts of the engine, as well as transmission, and suspension of vehicles. For some structural elements of vehicles there are suitable mixed laminates of metal-plastic materials called "sandwich" (single or multiple layered). In this sector, engineering, the use of the composite material, itself composite, provides both a significant costs reduction, and significant and obvious environmental aspects.

By applying the present invention it is achieved a economic circuit of waste and there are solved storage problems, thus the positive impact on the environment is remarkable.

## Claims

1. Composite material comprising: a plastics matrix and a filler, **characterized in that**
- the filler is grinded asbestos-cement, preferably grinded asbestos-cement waste, in a ratio of up to 20% by weight, preferably between 12 and 20 % by weight based on the total amount of composite material, having the particle size between 2 micrometers and 0, 4 mm, and
- the plastic material is PET waste.

2. Composite material according to claim 1 wherein the grinded asbestos-cement has the particle size between 2-5 micrometers.

3. Composite material according to any one of the claims 1-2 wherein the ratio of grinded asbestos-cement is of 20% by weight.

4. Composite material according to any of the claims 1-3 that includes also asbestos, preferably Chrysotile.

5. Composite material according to any of claims 1-4, that comprises also alumina Al₂O₃.

6. Composition comprising the composite material according to any preceding claim and one or more adhesives.

7. Use of PET plastic material to neutralize asbestos-cement or asbestos-cement waste.

8. Method for recycling of asbestos-cement or asbestos-cement waste consisting of embedding the asbestos-cement in a plastics matrix made of a plastic material which is PET.

## Patentansprüche

1. Verbundwerkstoff enthaltend: eine Kunststoffmatrix und ein Füllmaterial, **dadurch gekennzeichnet dass**
- das Füllmaterial ist gemahlener Asbestzement, vorzugsweise gemahlene Asbestzementabfälle, in einem Verhältnis von bis zu 20 Gewichts-%, vorzugsweise zwischen 12 und 20 Gewichts-%, bezogen auf die Gesamtmenge des Verbundwerkstoffs, mit einer Teilchengröße zwischen 2 Mikrometer und 0, 4 mm, und
- das Kunststoffmaterial ist PET Abfall.

2. Verbundwerkstoff nach Anspruch 1, wobei der gemahlene Asbestzement hat eine Teilchengröße zwischen 2 und 5 Mikrometer.

3. Verbundwerkstoff nach einem der Ansprüche 1 und 2 wobei das Verhältnis des gemahlenen Asbest-Zements ist von 20 Gewichts-%.

4. Verbundwerkstoff nach einem der Ansprüche 1 bis 3 das auch Asbest, vorzugsweise Chrysotile umfasst.

5. Verbundwerkstoff nach einem der Ansprüche 1 bis 4 das auch Aluminiumoxid Al₂O₃ umfasst.

6. Zusammensetzung bestehend aus dem Verbundwerkstoff nach einem der vorhergehenden Ansprüche und einem oder mehreren Klebstoffen.

7. Verwendung von PET-Kunststoffmaterial, um Asbestzement oder Asbestzementabfälle zu neutralisieren.

8. Verfahren zur Verwertung von Asbestzement oder Asbestzementabfälle bestehend aus Einbetten des Asbestzements in die Kunststoffmatrix bestehend aus einem Kunststoffmaterial, das PET ist.

## Revendications

1. Matériau composite comprenant: une matrice de matière plastique et un matériau de remplissage, **caractérisé en ce que**
- le matériau de remplissage est l'amiante-ciment broyé, de préférence les déchets d'amiante-ciment broyés, dans un rapport allant jusqu'à 20% en poids, de préférence entre 12 et 20% en poids sur la base de la quantité totale du matériau composite, ayant la taille de particules comprise entre 2 micromètres et 0, 4 mm, et
- la matière plastique est des déchets de PET.

2. Matériau composite selon la revendication 1 dans lequel l'amiante-ciment broyé a la taille des particules comprise entre 2 - 5 micromètres.

3. Matériau composite selon l'une quelconque des revendications 1 à 2 dans lequel le rapport de l'amiante-ciment broyé est de 20% en poids.

4. Matériau composite selon l'une quelconque des revendications 1 à 3 qui comprend aussi de l'amiante, de préférence du Chrysotile.

5. Matériau composite selon l'une quelconque des revendications 1 à 4 qui comprend aussi de l'alumine Al₂O₃.

6. Composition comprenant le matériau composite selon l'une quelconque des revendications précédentes et un ou plusieurs adhésifs.

7. Utilisation d'une matière plastique PET pour neutraliser l'amiante-ciment ou les déchets d'amiante-ciment.

8. Procédé de recyclage de l'amiante-ciment ou des déchets d'amiante-ciment comprenant l'incorporation de l'amiante-ciment dans une matrice en matière plastique constituée d'un matériau plastique qui est du PET.
